# EUROPEAN PATENT SPECIFICATION

(11) **EP 1 442 625 B1**
(45) Date of publication and mention of the grant of the patent: **20.10.2010**
(21) Application number: 02769806.7
(22) Date of filing: 30.10.2002
(51) Int. Cl.: H04W 4/14

(54) **METHOD AND APPARATUS FOR PROVIDING EXTENDED CALL SETUP AND CONTROL FEATURES USING A SHORT MESSAGE SERVICE**
VERFAHREN UND VORRICHTUNG ZUM BEREITSTELLEN VON LEISTUNGSMERKMALEN ZUM AUFBAU UND ZUR STEUERUNG VON ERWEITERTEN ANRUFEN UNTER VERWENDUNG EINES KURZNACHRICHTENDIENSTES
PROCEDE ET APPAREIL PERMETTANT D'OBTENIR DES CARACTERISTIQUES SUPPLEMENTAIRES D'ETABLISSEMENT DE COMMUNICATION ET DE COMMANDE AU MOYEN D'UN SERVICE SMS

(30) Priority: 30.10.2001 US 330751 P
(43) Date of publication of application: 04.08.2004
(73) Proprietor: Lang, Alexander C., Toronto, Ontario M5B 1N2 (CA)
(72) Inventor: Lang, Alexander C., Toronto, Ontario M5B 1N2 (CA)
(74) Representative: Palmer, Jonathan R.
(86) International application number: PCT/CA2002/001630
(87) International publication number: WO 2003/039181

(56) References cited:
- EP-A- 1 109 415
- WO-A-00/79826
- WO-A-02/21816
- WO-A-98/09423

## Description

### TECHNICAL FIELD

The present invention relates generally to extended call setup and control, and particularly to a system and method for effecting the establishment of enhanced call connections using a short message service (SMS) message.

### BACKGROUND OF THE INVENTION

The use of mobile communications devices and cellular telephones is growing rapidly as consumers are discovering the advantages of being accessible by telephone while commuting, or otherwise away from their office or home.

While increasing the mobility of persons may be perceived as being generally beneficial, certain disadvantages also accrue. For example, the increased mobility has meant that it is less and less likely that a group of persons will be co-located at a central location and able to participate in meetings.

Thus, there is an increased need to provide conference calling features, in order to permit meetings between various participants dispersed at sundry locations.

Traditionally, such conference calls have been organized so that participants gather at pre-defined wireline locations at a single date and time, in order to participate in a conference call set up between such locations. While workable, such wireline conference calls are sub-optimal in that they limit the mobility of participants, who must agree and arrange to attend at one of the pre-defined wireline locations in order to participate in the conference call. This requirement tends to negate the freedom from being tethered to a wireline telephone provided to the participants through the use of cellular telephones.

Those having ordinary skill in this art will recognize that the foregoing wireline conference calls can incorporate participants by cellular telephone. Thus, the need for access to conference calling features by mobile users has grown. However, a significant difficulty arises in that cellular telephones generally are not equipped, or at least not conveniently equipped, with features for performing call bridging or 3-way calling, which is required in order to initiate a dial-up conference call. The absence of means for enabling mobile users to initiate and effect control operations on conference calls, limits the use of this call enhancement.

A further disadvantage of the wireline conference call is its relative inflexibility. Meetings, whether face-to-face or by conference call, are generally dynamic. It frequently arises that unexpected issues are raised and discussed, and other persons not participating in the meeting may have to be consulted.

In the context of a face-to-face meeting, such developments may be relatively easily accommodated. However, once the connections for a wireline telephone conference call have been established, it is difficult, if not impossible, to locate and add new participants to the call, especially if there is no alternate telephone device through which the proposed participant may be contacted so that participation in the pending conference call may be set up. As a result, when a meeting dynamic changes and other persons are required to be consulted the conference call must often be terminated and rescheduled at a later time or date in order to permit the participation of these other persons.

It is known from WO 00/79826 to provide a system with conference call invitations using SMS messaging. In order to effect a conference call, each participant must independently call a preselected number to join a conference bridge.

It is known from WO 98/09423 to provide automatic call set-ups, but this document does not provide any disclosure as to how such calls may be connected through a PSTN or conferencing using PSTN equipment. Furthermore, there is no suggestion of controlling established call connections.

Accordingly, there remains a need for a method and system for permitting mobile users to request set-up and to control functions of extended calls such as conference calls.

### SUMMARY OF THE INVENTION

It is therefore an object of the invention to provide a method and system for permitting mobile users to request set-up and to control functions of extended calls, such as conference calls.

It is another object the invention to provide such a method and system using features, such as short message service (SMS), that are typically and conveniently provided to cellular telephone users, without requiring, modification of the cellular telephone.

In accordance with an embodiment of the invention, users can set up, initiate and participate in conference calls using a cellular telephone and SMS messages. The SMS messaging feature also permits a user to control the configuration of the conference call while the call is in progress, without the need for additional equipment, such as a second telephone device.

A conference call is set up by an initiating party using the SMS messaging feature. The initiating party transmits a message or series of messages that identify each participant by telephone number and specifies a date and time for the conference call. The date and time may be in the future, or may take effect immediately. Upon the provision of this information by the initiating party, the system forwards an invitation to each of the participants to permit them to accept the conference call using the SMS messaging feature. The invitation identifies the date and time of the conference call and specifies a conference bridge number (CBN) to be transmitted in order to accept participation in the conference call. The CBN uniquely identifies the conference call to which the participant is to be joined.

At the designated date and time, the system attempts to connect each participant who accepted the conference call invitation. If the system is able to establish a connection with the participant, it adds the participant to the conference call using a conference bridge in a manner well known in the art.

The SMS messaging feature need not be available on the cellular telephone device itself. Rather, text messaging available on a separate device such as a personal digital assistant may also be used. Indeed, a wireline telephone may also be used for the call after call setup is accomplished using an SMS or text messaging equipped device.

Participants who may wish to participate in a conference call but do not have SMS capability may interact with the system using other suitable electronic text messaging means, such as e-mail or by voice using a dial-up IVR unit. Alternatively, they may accept the call at the time, prompted by an IVR unit.

When it is desired to add a new participant to the conference call, one of the existing participants may transmit an SMS message to the desired participant containing the designated CBN and other information identifying the telephone call. Alternatively, an existing participant may transmit an SMS message to request that the system invite the intended participant, whereupon the system transmits instructions to permit the desired participant to join the conference call. In either case, the intended participant may join the conference call by merely transmitting the requested information by SMS message.

The method and system in accordance with the embodiments of the present invention therefore provide a simple, convenient and powerful mechanism for setting up, controlling and participating in extended calls such as conference calls between cellular telephones.

### BRIEF DESCRIPTION OF THE DRAWINGS

Further features and advantages of the present invention will become apparent from the following detailed description, taken in combination with the appended drawings, in which:
FIG. 1 is a schematic diagram illustrating principal components of a system shown in an exemplary deployment for providing SMS message-initiated call setup and control operations in accordance with an embodiment of the invention;
FIG. 2 is a flow chart illustrating principal steps performed by a conference scheduler database application in accordance with an embodiment of the invention with a conference request;
FIGs. 3 and 3b are flow charts illustrating principal steps performed by a call controller in accordance with an embodiment of the invention when a call request generated by the conference scheduler database application is retrieved from the call controller database;
FIG. 4 is a call flow diagram illustrating principal steps in a successful attempt to arrange a conference call on a scheduled basis;
FIG. 5 is a call flow diagram illustrating principal steps in a successful attempt to establish a previously scheduled conference call;
FIG. 6 is a call flow diagram illustrating principal steps in a successful attempt to arrange a conference call involving a participant using a wireline telephone and without SMS capability;
FIG. 7 is a call flow diagram illustrating principal steps in two successful attempts by a participant to join an ongoing conference call at the invitation of an existing participant; and
FIG. 8 is a call flow diagram illustrating principal steps in a successful attempt by a participant to forward an ongoing conference call from one telephone number to another.

It will be noted that throughout the appended drawings, like features are identified by like reference numerals.

### DETAILED DESCRIPTION OF THE PREFERRED EMBODIMENT

The present invention provides a system and method for establishing conference call connections using SMS messages sent from any device adapted to communicate using a text messaging protocol such as SMS. The call may be set up to connect a group of telephone devices accessible through the public switched telephone (PSTN) wireline or the wireless telephone networks. Preferably, the participants in the conference call have the ability to communicate using the short message service (SMS) protocol, whether directly through the participant's associated wireless telephone or through an alternative text messaging device, such as a personal digital assistant (PDA). The method also enables users to join the call using an SMS message, if they possess requisite information. A party to a call (extended or otherwise) may also transfer or bridge the call using SMS messaging.

Requesting or scheduling initiation of the extended call may alternatively be made through an Internet portal or web page of the service provider, to expedite entry of the request. SMS messages may therefore alternatively be used only to enable calling parties to join, and possibly to invite other SMS users to join the extended call.

### System Overview

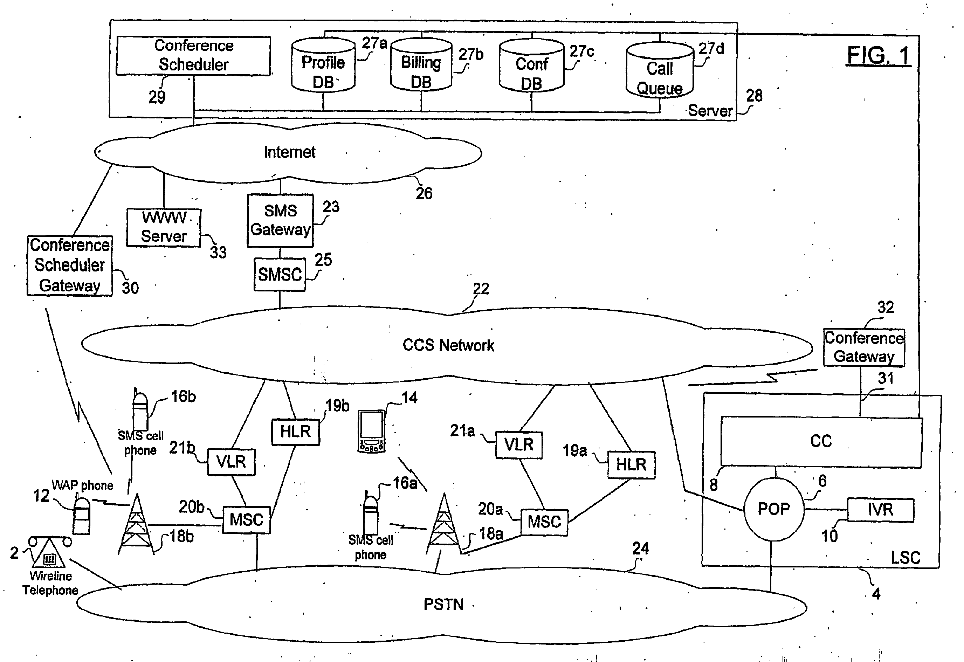

FIG. 1 illustrates an exemplary deployment of a system for providing telephone conference call services to customers who initiate conference call requests using the SMS protocol. A Public Switched Telephone Network (PSTN) 24, as is well known in this art, comprises a network of switched trunks for carrying voice and data traffic between terminal units, such as conventional telephone terminals 2. Usage of the trunks in the PSTN 24 are controlled by a Common Channel Signaling (CCS) network 22, such as Signaling System Number 7 (SS7). The CCS network 22 includes a plurality of switches interconnected by signaling and trunk lines. The architecture of the CCS network 22 is also well known in this art.

As discussed above, use and deployment of cellular telephones 16 is rapidly increasing. As is well known in this art, the SS7 system uses the Mobile Application Part (MAP) protocol which defines the methods and mechanisms of communication in wireless networks, using the SS7 Transactional Capabilities Application Part (TCAP). The MAP protocol makes use of other CCS nodes such as Mobile Switching Centers (MSC) 20, Home Location Registers (HLR) 19 and Visitor Location Registers (VLR) 21.

The HLR 19 is a database used for permanent storage and management of subscriptions and service profiles for subscribers at the point of subscription. The MSC 20 is a switch that controls voice circuits. It communicates wirelessly with cellular telephones within its associated cellular region through one or more associated base station subsystem(s) (BSS) 18. The MSC 20 also makes circuit connections into the PSTN 24 to establish an outgoing call from the cellular telephone 16 or accepts a connection from the PSTN 24 to establish an incoming call to a cellular subscriber. The BSS 18 includes a base station controller (BSC) that controls one or more base transceiver systems (BTS). Each BTS defines a cell of a cellular network and communicates wirelessly with the cellular telephone 16. The BSC manages resource assignment when a subscriber moves from one sector of one BTS to another.

The VLR 21 stores information for cellular subscribers that are roaming within cells managed by the associated MSC 20.

The MAP protocol also supports SMS wireless service. SMS enables the transmission of alphanumeric messages between mobile subscribers and external systems, such as electronic mail, paging and voice-mail systems. The maximum length of an SMS message is typically 160 characters.

A hallmark of the SMS service is that message delivery is guaranteed by the network. If the destination unit is unavailable, the message is stored until the destination unit becomes available. Further, so long as the destination unit is active, it may generally receive or send an SMS message, independent of whether a voice or data call is in progress. Where an SMS message is to be transmitted between mobile users, the message is transmitted wirelessly from the transmitting unit, say 16a to the BSS 18a associated with the MSC 20a governing the transmitting unit's present location. The SMS message is thereafter routed along the CCS network 22 elements to the recipient's governing MSC 20b, for example, through the associated BSS 18b and wirelessly out to the recipient unit 16b.

Certain wireless devices other than cellular telephones 16 may have SMS functionality. Such devices may include Personal Digital Assistants (PDA) 14 having wireless capability, such as Research in Motion's Blackberry^{®} and 3Com Corporation's Palm VII^{®} devices, which can communicate using the SMS feature of the BSS 18 and the associated MSC 20, but do not make use of the voice/data cellular network. WAP telephones 12 may also support SMS messaging.

One of the benefits of SMS service is its ability to exchange messages with non-mobile units, such as voice-mail systems, web-based messaging systems enabled by the SMS web gateway 23 from the Internet 26, e-mail and other external Short Messaging Entities (SME). This interface is implemented using SMS Centers (SMSC) 25 interconnecting MSCs 20 and an SME. The SMSC 25 relays, stores and forwards short messages from an SME to a mobile device.

When an SMS message is to be transmitted from an external SME, such one connected to the web SMS gateway 23, the SMSC 25 and the SME take the place of the MSC 20. Thus, an SMS message received from the Internet 26 by the SMS web gateway 23 will be communicated to the SMSC 25 and transmitted through the CCS network 22, to the MSC 20 serving the recipient, through the associated BSS 18 and wirelessly out to the recipient unit 16.

The system for providing telephone conference call services in accordance with the present invention includes a conference scheduler gateway (CSG) 30, a centrally located conference call server 28 and at least one service center 4.

The conference scheduler gateway 30 receives SMS messages addressed to it and converts the message content into a text message for transmission, together with a header indicating who sent the message, over a secure connection, such as TCP/IP, through the Internet 26 to the server 28.

Alternatively, a conference gateway 32 may be connected directly to a call controller 8 by an Ethernet link 31, for example. The conference gateway receives SMS messages directly over a wireless link from a wireless base station, base station 18a, for example. This has advantages in that, since the SMS network guarantees SMS message delivery, the delay and potential loss of data packets that can occur in the Internet is avoided. The conference gateway 32 preferably includes all of the functionality of the server 28, including the respective databases, which may be accessed through the Internet by customers who wish to add or change records in their personal profiles, etc. Consequently, the conference gateway is adapted to wirelessly receive SMS messages and to process the messages in the same way that the server 28 does. Alternatively, the conference gateway may pass the SMS messages directly to the call controller 8, without conversion, in with case the call controller 8 includes the conference scheduler database application 29, and the databases 27a-27d.

The server 28 is accessed by customers through the Internet 26, typically using SMS messages sent by a customer using a cellular telephone 16 via the conference scheduler gateway 30. Optionally, a web server 33 may provide a worldwide web gateway that permits customers to schedule conference calls using a web interface.

The server 28 includes or has access to a conference scheduler database application 29 and a plurality of databases 27a-27d. Internal or external connections permit the conference scheduler database application 29 to access and update the various databases 27. The conference scheduler database application 29 receives the content of SMS messages and processes them in order to schedule, initiate and reconfigure requested conference call services.

The databases include a profile database 27a, a billing database 27b and a conference database 27c. The profile database 27a maintains customer profiles, including pre-defined conference call configurations, user preferences and permissions. The billing database 27b maintains financial records including prepaid services. The conference database 27c maintains a list of scheduled conference calls. A call queue 27d accessed by call controllers (CC) 8 using a secure connection to pull for conference calls that are to be initiated, or reconfigured.

Each service center 4 includes for example, a point-of-presence (POP) switch 6, the CC 8 and an intelligent peripheral such as an Interactive Voice Response (IVR) unit 10. Service center 4 are located whenever traffic volume warrants, for example, in each major city in the service area.

The POP 6 is a telecommunications switch and is integrated into the PSTN 24. Alternatively, it may be an existing toll switch within the PSTN 24. In any event, the ability to bridge calls is central to its functionality. The CC 8 - is an application that periodically polls its assigned call queue 27d through a secure connection to obtain requests for calls to be set up or reconfigured by the service center 4. It also accesses and updates the databases 27 through a secure connection. It sends instructions to the POP 6, as required, to effect to the call requests. The IVR 10 is an intelligent peripheral that permits voice interaction with a system user in order to obtain information for customer validation and call setup or reconfiguration.

The server 28 and the service center 4 cooperate to provide conference call services to customers in accordance with an embodiment of the present invention.

The system for providing conference call services is a subset of a group of services provided by a telephone service provider (TSP). Such services are explained both generally and specifically (in the context of providing long distance call connections) in Applicant's co-pending United States Patent Publication No. 20020136390, entitled A SYSTEM AND METHOD FOR ESTABLISHING CALL CONNECTIONS USING ELECTRONIC TEXT MESSAGES, filed March 22, 2001, and published on September 26, 2002.

In accordance with the present invention, any wireline or wireless device, but typically an SMS-equipped cellular telephone, may send an SMS text message to the conference scheduler database application 29 to request a conference call setup. As will be explained below in some detail, when the conference scheduler database application 29 receives an SMS text message requesting a conference call, the message is parsed and validated. If valid, the conference scheduler database application 29 schedules the conference call by sending SMS text messages to the proposed participants, who may accept or decline the conference call invitation. When the conference call is to take place, the conference scheduler database application 29 updates the call queue 27d to request that connections be made to establish the conference call.

The CC 8 systematically polls the call queue 27d and retrieves call requests for completion by the POP 6. As will also be explained below in some detail, an intelligent peripheral, such as IVR 10, may be used under certain circumstances to obtain conference call related information.

### Electronic Text Message Format

It will be understood by persons skilled in the art that in order to be interpreted, electronic text messages must conform to a predetermined format. As will be appreciated, the format for an electronic text message is essentially a matter of design choice. Nonetheless, each electronic text message must contain adequate information to permit the system to establish the desired conference call.

The SMS message format itself imposes a few constraints on the format of the electronic text message. SMS messages have a maximum length of 160 characters, but may be concatenated to form larger messages. Nevertheless, because the transmission of each message incurs a service charge, messages should comprise a collection of generally highly-coded and brief command sequences. Thus, an exemplary text message format for a request to schedule a conference call is as follows:

### command; abort time; origination no.; destination info(s); date/time; POP; billing code

The **command** listed above in bold text is mandatory and must be provided for every call request. The command specifies the type of call that is to be established by the system. In the context of the invention, exemplary commands are: "cc"; "scc", "cc#" and "scc#". The "cc" command is used to establish a conference call between three or more parties on an immediate basis, as discussed below. The "scc" command is used to establish a scheduled conference call at a later date. The "cc#" and "scc#" commands are used to originate predefined sets of originating number /destination number groups that are stored in a customer profile for either immediate or scheduled conference calls respectively.

The optional **abort time** field may be specified to avoid calls at an inconvenient time. Since not all forms of electronic text messaging, including SMS, can be relied upon to deliver messages within a predicted time, the "abort time" limits the window in which an attempt will be made to schedule a conference call. The abort time is preferably specified in the format "dd:mo:hh:mm, Time Zone"; a 24-hour format, followed by a time zone indicator. If an abort date is not specified, the date on which the message was sent, as indicated in the message header, is assumed. If the abort time has passed when the message is received, the message is discarded and a call aborted message is returned to the requester.

In the customer's profile, an originating number is designated as a default. The optional origination no. information permits a requester to specify an originating number which is not stored in the customer profile. The specification of an originating number that is not stored in the customer profile initiates a special authentication procedure to determine the entitlement of the caller to place a call, as described in Applicant's co-pending United States Patent Application No. 09/813,845, referenced above.

The mandatory **destination info(s)** information is used to specify the contact information for two or more conference call participants. The contact information consists of a primary destination number, an optional backup destination number, and a text messaging address. The destination number(s) may conform to any number plan format and must appear first. Multiple contact information groups are separated by semicolons.

Where a destination primary or backup number is associated with an SMS-enabled cellular telephone, SMS messages may be addressed to the participant by sending them to the destination telephone number. In such a case, the SMS-capability is indicated by the letter "s" following the slash character instead of an explicit text messaging address. Where a participant does not have electronic text message capability, this may be indicated by the letter "v" following the slash character in place of any explicit text messaging address.

Those having ordinary skill in this art will readily recognize that the originating text message address is not provided. It is unnecessary because it is inferred from the message header of the text message containing the command sequence. In the case of an SMS message, the originating text message address is identified using the originating telephone number, which is stored in the "from" field of the SMS message. This telephone number must be among the originating numbers stored in the customer profile database 27a.

The **date/time** information is used for scheduled calls, that is, calls that are not to be initiated immediately. Thus, the date/time field will only be valid with the following commands: "scc" and "scc#". At the same time, the omission of the date/time field for these commands will result in a syntax error. The date/time information is preferably specified in the format "dd:yy:mo:hh:mm, TimeZone". The time is preferably specified in 24-hour format, followed by a time zone indicator. If a date is not specified, the current date is assumed.

The optional **POP** (point of presence) information is used to indicate a particular POP from which the conference call is to be set up.

The **billing** code is an optional field used to associate charges for the call with a particular billing code, as is well known in this art.

In addition to the Scheduling Request message format, there are a number of other SMS messages that may be exchanged between users and the system, namely the Invitation, Accept, Decline, Join and Forward messages.

The Invitation message is sent by the conference scheduler database application 29 to each participant in the conference call as identified in the Scheduling Request message. The **abort time** and **date/time** fields have the same significance as in the Scheduling Request message. The CBN field contains a conference bridge number assigned by the server 28 to uniquely identify the conference call. An exemplary text message format is as follows:
Invitation message format:
   **i;** abort time; CBN; date/time

The Accept and Decline messages are sent by each recipient of an Invitation message to indicate whether the recipient wishes to participate in the proposed conference call identified by the CBN field. Exemplary text message formats are as follows:
Accept message format:
   **a;** abort time; CBN
Decline message format:
   **d;** abort time; CBN

The Join message may be sent by a proposed participant to the system to request admission into an ongoing conference call. The proposed participant must have been previously provided with the CBN, which both identifies the conference call and serves to validate the proposed participant. Alternatively, the Join message may be sent by a present participant in the conference call to the system, to request that an invitation be sent to the proposed participant. In this case, the destination info field is required to identify the proposed participant to the system. The destination info field is not required when the proposed participant sends the Join message, because this can be inferred from the message header of the text message containing the message. An exemplary text message format is as follows:
Join message format:
   **j;** abort time; CBN; destination info

The Forward message may be sent by a present participant in an ongoing conference call to forward the participant's telephone number **(origination no.)** to a new telephone number **(destination no.).** Because no SMS message need be sent, the text messaging address is not required. An exemplary text message format is as follows:
Forward message format:
   **f;** abort time; CBN; origination no.; destination no.
   **Conference Scheduler Processing**

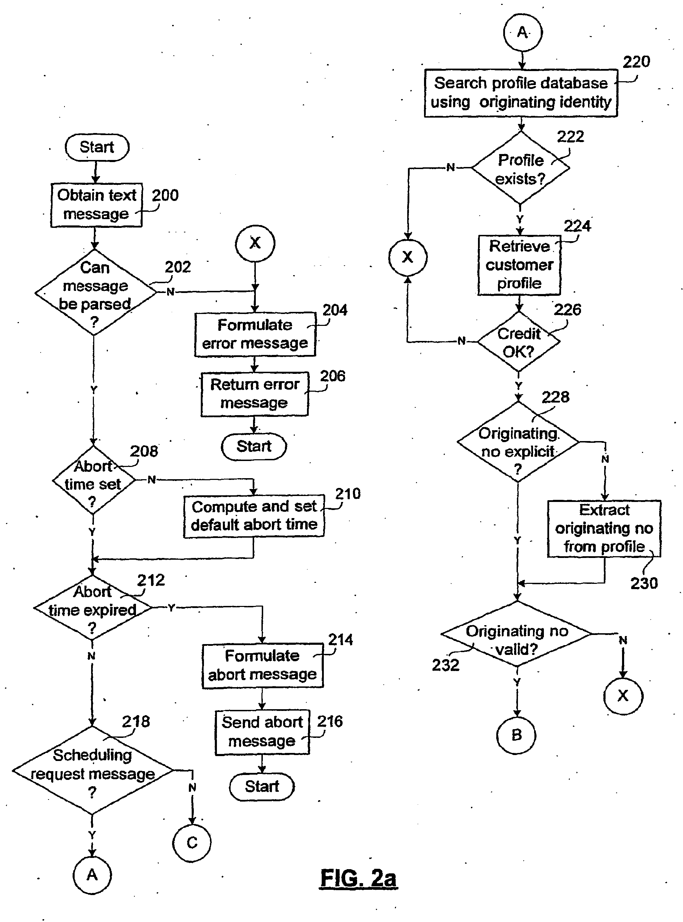

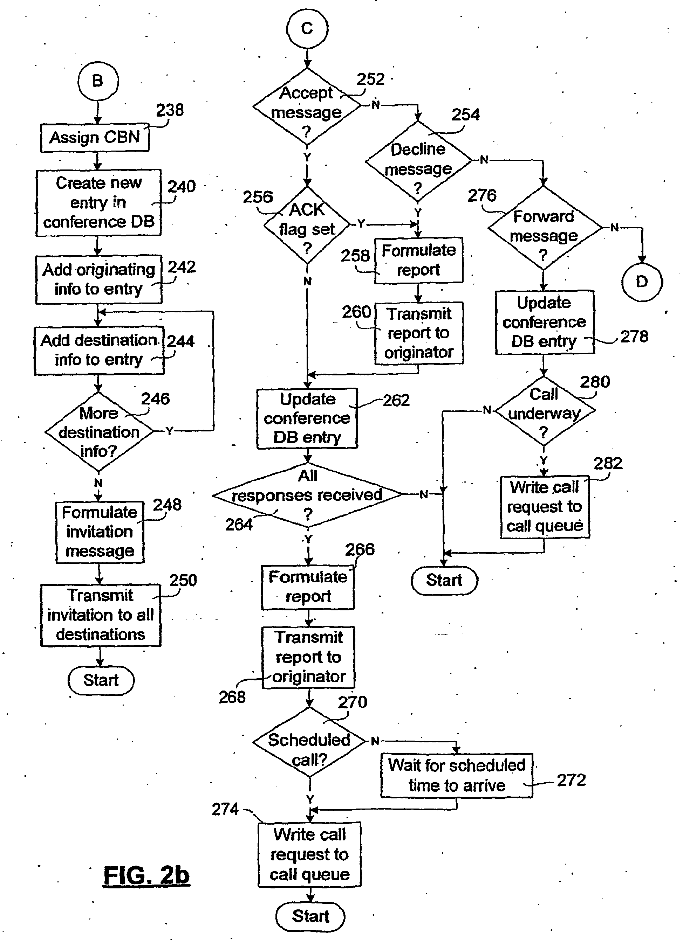

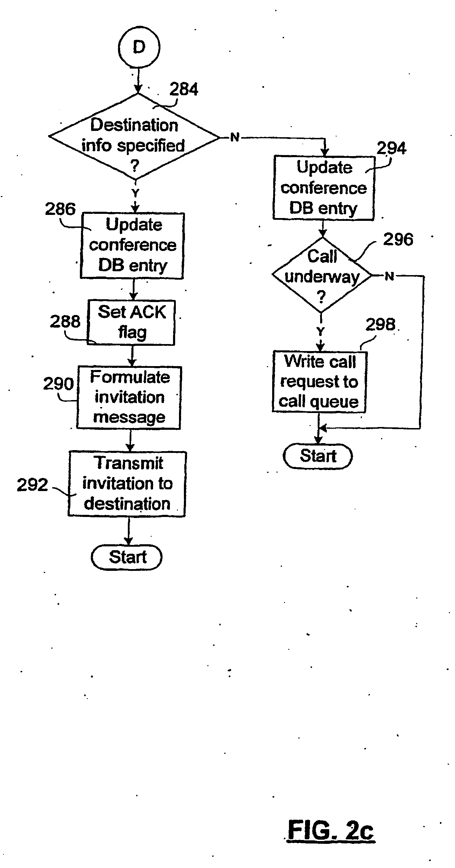

FIG. 2 is a flow diagram showing principal steps performed by the conference scheduler database application 29, to manage the exchange of the above-identified messages with users and to access and update the databases 27 in conjunction therewith.

A text message is retrieved by the conference scheduler database application 29 from the Internet 26, or directly by the CC 8 from the conference gateway 32 (step 200). The conference scheduler database application 29 examines the delimited information in the message (step 202) to determine whether the message can be parsed. If the information is incorrectly specified or critical information is missing, the conference scheduler database application 29 formulates an appropriate error message (step 204) and transmits it to the originator identity extracted from the message header (step 206), at which point it waits for the receipt of another message.

If it is determined that the message can be parsed, the conference scheduler database application 29 determines if an abort time was specified in the message (step 208). As explained above, the abort time is used to ensure that a call is not completed at an inconvenient time. If an abort time has not been specified, a default abort time is computed (step 210) using the time specified in the message header that indicates when the message was sent, plus a pre-determined default interval, say 5 minutes. In either case, the abort time is compared to the system time to determine whether it has expired (step 212). If the abort time has expired, an abort message is formulated (step 214) and the conference scheduler database application 29 transmits it to the originator identity extracted from the message header (step 216), at which point it waits for the receipt of another message.

If the abort time has not expired, the conference scheduler database application 29 determines if the message is a Scheduling Request message (step 218). If not, it proceeds to step 252, described below.

### Scheduling Request Message

If the message is a Scheduling Request message, the originator identity is extracted from the message header and used as a key to search the profiles database 27a to determine if the originator is entitled to request a conference call (step 220). If a customer profile cannot be located (step 222), the conference scheduler database application 29 formulates an appropriate error message (step 204) and transmits it to the originator identity extracted from the message header (step 206), at which point it waits for the receipt of another message.

Otherwise, the customer profile record is retrieved (step 224). Credit is checked with the corresponding entry in the billing database 27b (step 226). If the subscriber lacks credit to initiate the call, the conference scheduler database application 29 formulates an appropriate error message (step 204) and transmits it to the originator identity extracted from the message header (step 206), at which point it waits for the receipt of another message.

If the credit is acceptable, the message is examined to determine whether the originating number was explicitly specified (step 228). If no originating number was specified in the text message, the originating number is extracted from the subscriber profile (step 230).

Whether the originating number was explicitly specified or not, the originating number is checked to ensure that it conforms to a known number plan (step 232). If not, the conference scheduler database application 29 formulates an appropriate error message (step 204) and transmits it to the originator identity extracted from the message header (step 206), at which point it waits for the receipt of another message.

If the originating number is valid, the conference scheduler database application 29 assigns a CBN to the requested conference call (step 238) and creates a new call entry in the conference database 27c (step 240). The conference scheduler database application 29 adds the originating information (both the telephone number and the text message address) into the new call entry (step 242).

The conference scheduler database application 29 also extracts all of the destination information specified in the received text message and adds each set into the new call entry (steps 244 and 246).

The conference scheduler database application 29 thereupon formulates an Invitation message containing the CBN, and if a scheduled call, the date/time (step 248) and transmits it to the originating and destination text message addresses (step 250), at which point it waits for the receipt of another message.

Those having ordinary skill in this art will readily recognize that certain proposed participants specified may not have text message addresses to which the invitation may be conveyed. This difficulty may be addressed in a number of ways (not shown).

For example, it may be assumed that the originator, who specified this in the Scheduling Request message, is aware of this fact, and will communicate directly with the proposed participants. Alternatively, it may be prearranged that a reminder message identifying those proposed participants be formulated and transmitted to the originating text message address. Still further, the conference scheduler database application 29 may be provided with access to an IVR 10, whereupon a recorded voice message may be sent to the telephone number of each such proposed participant, conveying the details and requesting a response.

In each case, the proposed participant will be requested to access either the web server 33 or to communicate by e-mail or other text means and transmit a response, whether using an Accept or Decline message as appropriate. Particularly in the case of the third option, the IVR 10 may also be used to solicit a response directly from the proposed participant at the end of the recorded voice message.

A further possibility, which is adapted here, is that such proposed participants are marked as requiring confirmation by the service center 4 at the time that the conference call is initiated. For the purposes of the conference scheduler database application 29, they are presumed to have accepted the invitation. Thus, the service center 4 will attempt to set up the call and will request confirmation using the IVR 10 before bridging such calls into the conference call.

### Accept or Decline Message

If the message received was not a Scheduling Request message (as described above with reference to step 218), the conference scheduler database application 29 determines if the message is an Accept message (step 252 FIG. 2b). If not, it determines if it is a Decline message (step 254).

If the message is an Accept message, the conference database 27c is queried to determine if an acknowledgement is required for the particular participant (step 256). An acknowledgement will be required only for those participants who are invited to join a conference call already in progress, or who have not otherwise been invited by the originator of the Scheduling Request message. The acknowledgment consists of a report to the originator of the Scheduling Request message indicating that the particular participant intends to join or is joining the conference call.

If an acknowledgment is required, or if a Decline message is received, the conference scheduler database application 29 formulates an appropriate report message (step 258) and transmits it to the originator of the Scheduling Request message (step 260).

Whether or not a report is formulated and transmitted, the conference scheduler database application 29 updates the call entry in the conference database 27c corresponding to the specified CBN to reflect the response from the particular participant (step 262).

If all responses have not been received yet (step 264), the conference scheduler database application 29 waits for the receipt of another message. Optionally, a timeout period may be established beyond which the conference scheduler database application 29 no longer waits for responses.

When no further responses are expected (or permitted), the conference scheduler database application 29 formulates a status report (step 266) and transmits it to the originator of the Scheduling Request message (step 268).

At this point, the scheduling process has been completed. If the requested conference call was to take place immediately, or when the scheduled time has arrived (step 272), the conference scheduler database application 29 writes call requests to the call queue 27d corresponding to the appropriate service center 4 and waits for the receipt of another message (step 274).

Those having ordinary skill in this art will recognize that step 272, during which the conference scheduler database application 29 waits for the scheduled time to arrive, does not mean that the conference scheduler database application 29 is unable to process other messages related to other conference calls in the interim. Step 272 merely serves to indicate that the call request is not written to the call queue 27d until the scheduled time has arrived.

### Forward Message

If the message received was not a Scheduling Request, Accept or Decline message (discussed in steps 218, 252 and 254 above), the conference scheduler database application 29 determines if the message is a Forward message (step 276). If not, the message must be a Join message.

If the message is a Forward message, the conference scheduler database application 29 updates the call entry in the conference database 27c corresponding to the specified CBN to reflect that a specified conference number is being replaced by a new conference number (step 278). If the conference call is already underway (step 280), the conference scheduler database application 29 writes a call request to the call queue 27d corresponding to the appropriate service center 4 (step 282). Thereafter, the conference scheduler database application 29 waits for the receipt of another message.

Optionally, the conference scheduler database application 29 may also formulate an appropriate report message and transmit it to the originator of the Forward message (not shown).

### Join Message

If the message received was not a Scheduling Request, Accept, Decline or Forward message (discussed in steps 218, 252, 254 and 276 above), the message must be a Join message.

In this case the conference scheduler database application 29 determines if destination information has been specified in the message (step 284 FIG. 2c). If so, the message is presumed to have been sent from a current participant in the conference call in respect of a proposed participant.

The conference scheduler database application 29 therefore updates the call entry in the conference database 27c corresponding to the specified CBN to add the specified destination information (step 286), sets the acknowledgement flag for this entry (step 288), formulates an Invitation message containing the CBN and optionally the date/time (step 290) and transmits it to the specified destination text message address (step 292), at which point it waits for the receipt of another message.

If the call being joined is already underway, when the recipient accepts the invitation and this is communicated to the server, the server will determine that the decision "All responses received?" (step 264) will be true. As well, the conference call is already underway. Therefore, a call request is written to the call queue (step 274) to join the new participant to the conference call.

If the call being joined has not yet commenced, the conference database need merely be updated. The recipient of the Join invitation will be connected to the call together with all other participants, when the call is initiated.

If no destination information has been provided in the message, the message is presumed to have been sent by a proposed participant who has been given the CBN by an existing participant. Presumably, the CBN could have been communicated by the transmission of an SMS message from the existing participant to the proposed participant. In any event, the conference scheduler database application 29 updates the call entry in the conference database 27c corresponding to the specified CBN to add the call termination information extracted from the message (step 294).

If the conference call is already underway (step 296), the conference scheduler database application 29 writes a call request to the call queue 27d of the appropriate service center 4 (step 298). Thereafter, the conference scheduler database application 29 awaits the receipt of another message. Optionally, the conference scheduler database application 29 may also formulate an appropriate report message and transmit it to the originator of the Join message (not shown in the flow chart).

As will be understood by those skilled in this art, the foregoing overview of conference scheduler database application processing is related to a specific network configuration and implementation and text messages may be processed in many other ways to achieve the same result.

### Call Controller Processing

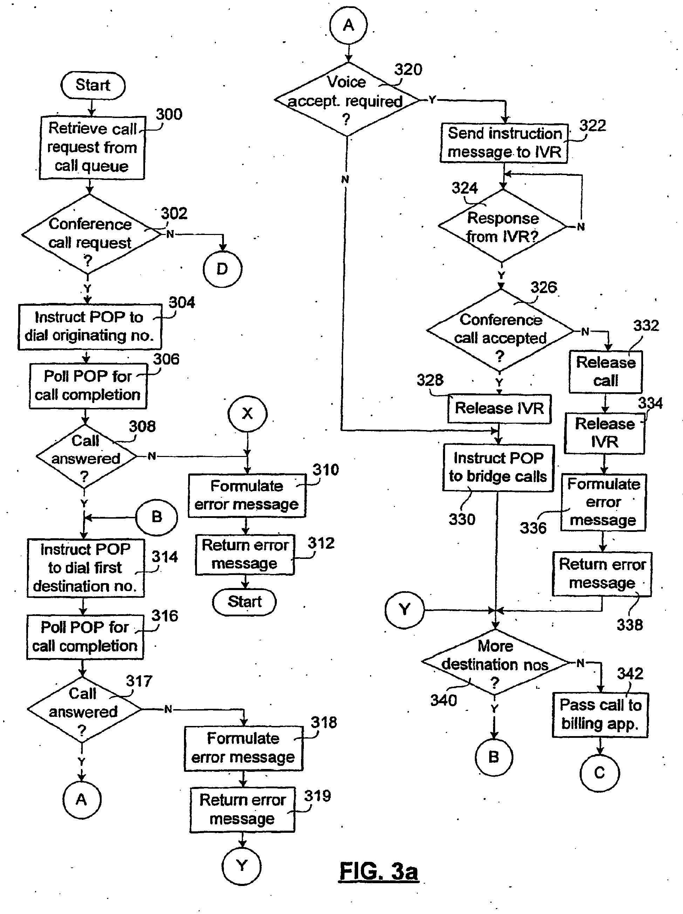

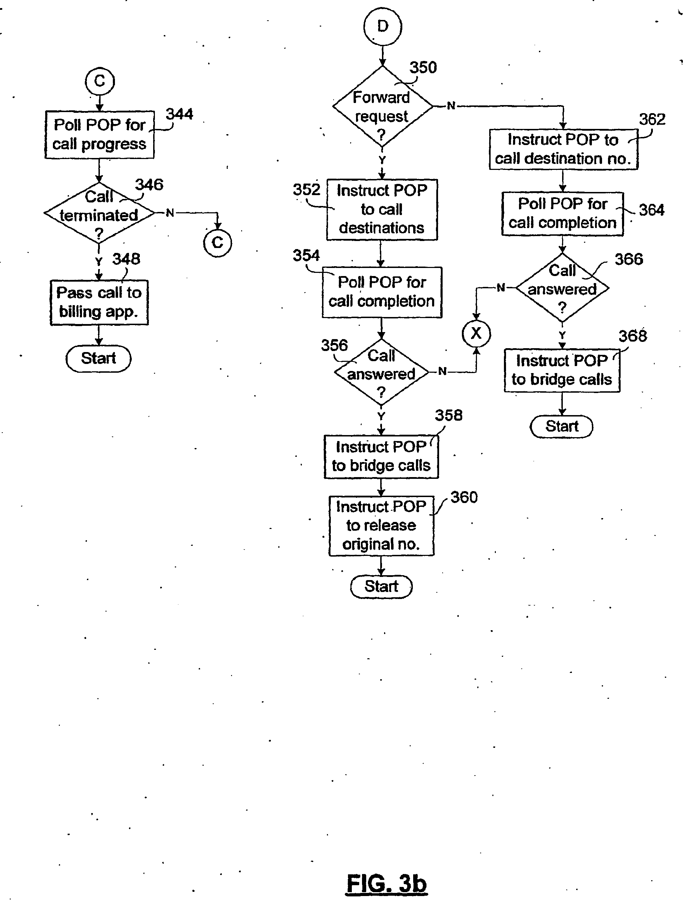

FIG. 3 is a flow diagram showing principal steps performed by a call controller 8, when a call request is written in steps 274, 282 or 298 of FIG. 2.

As shown in FIG. 3, the call controller 8 retrieves a call request from the call queue 27d (step 300). The call controller 8 determines if the call request is for a conference call (step 302). If not, it proceeds to step 350 described below.

### Conference Call Request

If the call request is for a conference call, the call controller 8 instructs the POP 6 to dial the originating number specified in the call request (step 304). The call controller 8 polls the POP 6 to determine when the call has been set up (step 306). After a predetermined time, the call controller 8 determines whether the call has been answered (step 308). If the call has not been answered, an error message is formulated (step 310) and returned to the requester (step 312), after which the call controller 8 retrieves another call request.

Otherwise, the call controller 8 instructs the POP 6 to dial one of the remaining destination numbers specified in the call request (step 314). The call controller 8 polls the POP 6 to determine when the call has been set up (step 316).. After a predetermined time, the call controller 8 determines whether the call has been answered (step 318). If the call has not been answered, an error message is formulated (step 318) and returned to the requester (step 319), after which the call controller 8 proceeds to step 340, to process other destination numbers that may have been specified.

If the call has been answered, the call controller 8 determines whether the dialed destination number is one for which acceptance of the conference call must be solicited (step 320). As discussed previously, this would be the case if the proposed participant has no text message address and was unable to accept or decline the conference call previously.

In this circumstance, an instruction message is sent by the call controller 8 to the IVR 10 instructing the IVR 10 to play a predetermined recorded voice message and solicit a response as to whether the proposed participant wishes to accept or decline the conference call (step 322). The response may be a voice response or a digit input using the telephone dial pad. The call controller 8 thereafter awaits a response from the IVR 10 (step 324). When a response is received, the call controller 8 determines if the conference call was accepted or declined (step 326). If the conference call has been accepted, the call controller 8 releases the call to the IVR 6 (step 328) and instructs the POP 6 to bridge the destination telephone call with the ongoing conference call (step 330), which includes the originating telephone call and any previous destination calls bridged therewith. If the conference call is declined, the call controller 8 releases the call to the destination telephone (step 332), releases the call to the IVR 6 (step 334), formulates an error message (step 336), which it returns to the requester (step 338).

In either circumstance, the call controller 8 determines if any more destination telephone calls remain to be made (step 340). If so, the call controller 8 proceeds to step 314 discussed above. If not, the call controller 8 passes call information to the billing database 27b (step 342).

Thereafter, the call controller 8 polls the POP 6 for call progress (step 344). If the call controller 8 determines that the conference call has not been terminated (step 346), it polls the POP 6 again after a predetermined time lapse.

Once the conference call has been terminated, the call controller 8 passes call information, including the termination time to the billing database 27b (step 348), after which the call controller retrieves another call request.

Those having ordinary skill in this art will recognize that step 346, which indicates that the call controller continuously polls the POP 6 until it is determined that the conference call has been terminated, does not mean that it is unable to process other received call requests relating to other calls in the interim. Rather, it merely serves to indicate that the call information is not passed to the billing database 27b until the call has been terminated.

### Call Forward Request

If the call request received was not a conference call request (discussed in step 302 above), the call controller 8 determines if the call request is a call forward request (step 350). If not, the call request must be a call join request and the call controller 8 proceeds to step 362 discussed below.

If the call request is a Call forward request, the call controller 8 instructs the POP 6 to dial the destination number specified in the call request (step 352). The call controller 8 polls the POP 6 to determine when the call has been set up (step 354). After a predetermined time, the call controller 8 determines whether the call has been answered (step 356). If the call has not been answered, an error message is formulated (step 310) and returned to the requester (step 312), after which the call controller 8 retrieves another call request.

If the call has been answered, the call controller 8 instructs the POP 6 to bridge the destination telephone call with the ongoing conference call (step 358), which comprises the originating telephone call and any previous destination calls bridged therewith. The call controller 8 thereafter releases the call to the originating number specified in the call request, which had been previously bridged into the ongoing conference call (step 360), after which the call controller 8 retrieves another call request.

### Call Join Request

If the call request was not a conference call or call forward request (discussed in steps 302 and 350 above), the call request must be a call join request. In that case, the call controller 8 instructs the POP 6 to dial the destination number specified in the call request (step 362). The call controller 8 polls the POP 6 to determine when the call has been set up (step 364). After a predetermined time, the call controller 8 determines whether the call has been answered (step 366). If the call has not been answered, an error message is formulated (step 310) and returned to the requester (step 312), after which the call controller 8 retrieves another call request.

If the call has been answered, the call controller 8 instructs the POP 6 to bridge the destination telephone call with the ongoing conference call (step 368), which comprises the originating telephone call and any previous destination calls bridged therewith, after which the call controller 8 retrieves another call request.

As will be understood by those skilled in this art, the foregoing overview of call controller processing is related to a specific network configuration and implementation and call requests may be processed in many other ways to achieve the same result.

### Example Calls

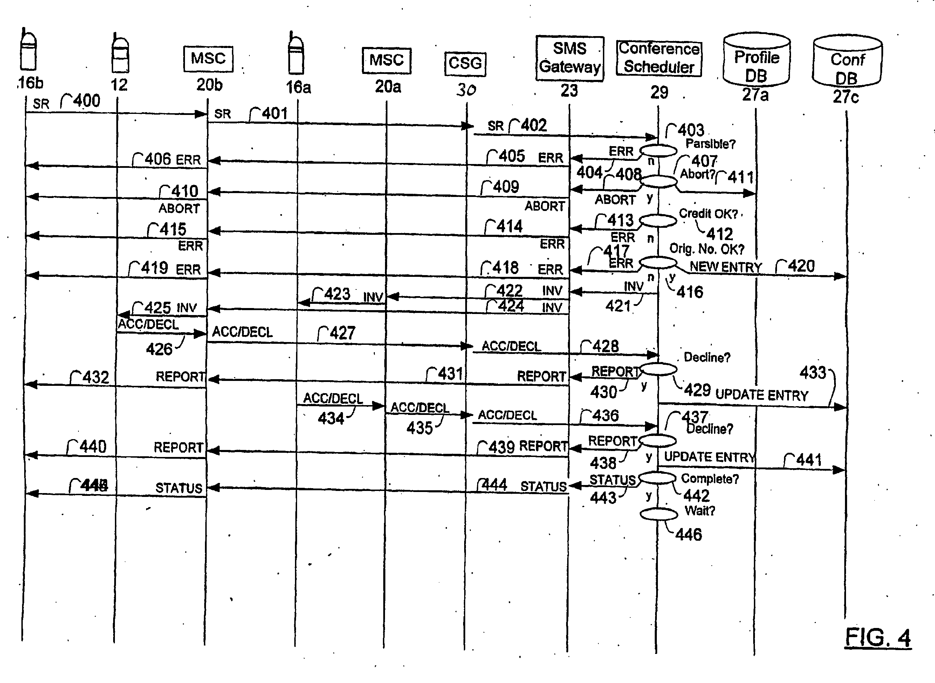

FIGS. 4-7 are call flow diagrams that illustrate principal steps in exemplary calls established using the methods and system in accordance with the present invention.

### Scheduling a Conference Call on a Scheduled Basis

FIG. 4 shows the call flow for a successful attempt to arrange a conference call on a scheduled basis. For exemplary purposes, it is assumed that cellular telephone 16b is the originator of the conference call request, and wishes to join in WAP telephone 12 and cellular telephone 16a.

The customer at cellular telephone 16b sends a Scheduling Request message containing the requisite details by SMS to MSC 20b (step 400) The message is in turn forwarded to conference scheduler database application gateway 30 and eventually to the conference scheduler database application 29 (steps 401-402). The conference scheduler database application 29 determines if it is parsible (step 403). If not, the conference scheduler database application 29 returns an error message to the customer at cellular telephone 16b through the SMS gateway 23, MSC 20b and the cellular telephone 16b (steps 404-406).

If the message is parsible, the conference scheduler database application 29 determines if the abort time has expired, as described above with reference to FIG. 2 (step 407). If so, the conference scheduler database application 29 returns an abort message to the customer at cellular telephone 16b along the same path. If the abort time has not expired, the conference scheduler database application 29 accesses the customer's profile from the profile database 27a, as described above with reference to FIG. 2 (step 411) and determines if the conference call may be arranged (step 412). If not, the conference scheduler database application 29 returns an error message to the customer at cellular telephone 16b along the same path as described above with reference to steps 404-406 (steps 413-415). If the conference call may be arranged, the conference scheduler database application 29 confirms that the originating number conforms to a known number plan (step 416). If not, the conference scheduler database application 29 returns an error message to the customer at cellular telephone 16b along the same path. If the originating number is accurate, the conference scheduler database application 29 assigns a conference bridge number (CBN) and creates a new entry in the conference database 27c, as described above with reference to FIG. 2 (step 420).

The conference scheduler database application 29 thereafter formulates an Invitation message that it forwards to the SMS gateway 23 (step 421) for transmission to the WAP telephone 12 and cellular telephone 16a. The SMS gateway 23 forwards the Invitation message to MSC 20a (step 422), which forwards it to cellular telephone 16a (step 423). The SMS gateway 23 also forwards the Invitation message to MSC 20b (step 424), which forwards it to WAP telephone 12 (step 425).

The WAP telephone 12 transmits an Accept or Decline message that it forwards through MSC 20b, conference scheduler gateway 30 and the conference scheduler database application 29 (steps 426-428). The conference scheduler database application 29 determines if the message is a Decline message (step 429). If so, it transmits a report message to this effect to the customer at cellular telephone 16b along the same path as steps 404-406 (steps 430-432). In either event, the conference scheduler database application 29 updates the conference database 27c (step 433). Cellular telephone 16a also transmits an Accept or Decline message that it forwards through MSC 20a, conference scheduler gateway 30 and the conference scheduler database application 29 (steps 434-436). The conference scheduler database application 29 determines if the message is a Decline message (step 437). If so, it transmits a report message to this effect to the customer at cellular telephone 16b along the same path as steps 404-406 (steps 438-440). In either event, the conference scheduler database application 29 updates the conference database 27c (step 441).

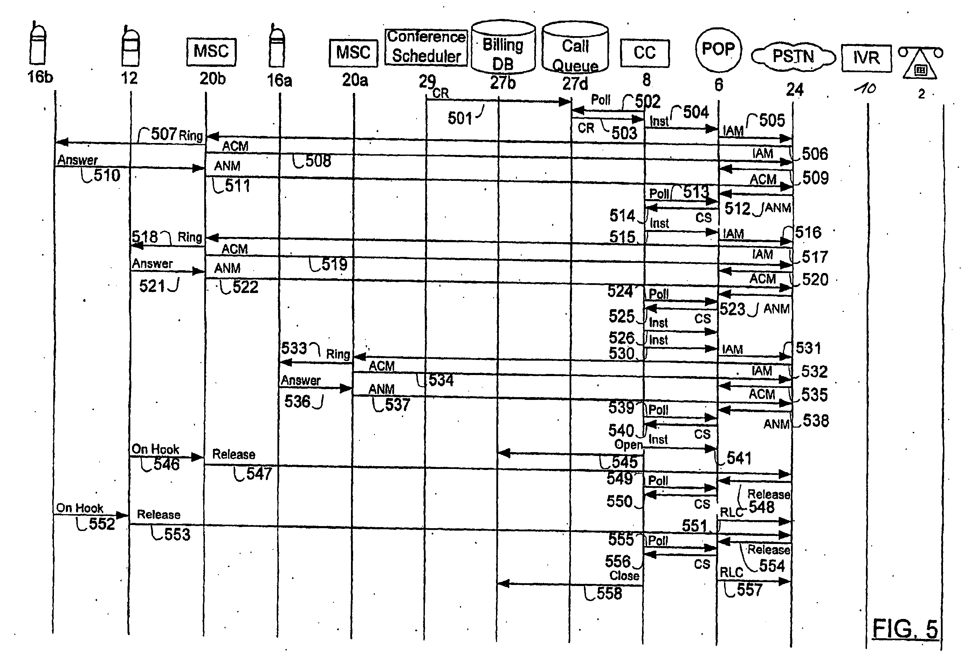

Once the conference scheduler database application 29 determines that all invitees have responded with either an Accept or Decline message (step 442), it transmits a report message listing the participants to the customer at cellular telephone 16b along the same path as steps 404-406 (steps 443-445). Because this is a scheduled conference, the conference scheduler database application waits until the scheduled time before proceeding to request that the conference call be established, as described below in FIG. 5 (step 446).

FIG. 5 shows the call flow for a successful attempt to establish a previously scheduled conference call. For exemplary purposes, it is assumed that cellular telephone 16b is the originator of the conference call request, and wishes to join in WAP telephone 12 and cellular telephone 16a. When the conference call is to be established, the conference scheduler database application 29 writes a call request record to the call queue 27d (step 501). The call controller 8 polls the call queue 27d on a regular basis (step 502) and retrieves call requests written to the call queue (step 503). When a Conference Call request is retrieved, call controller 8 sends an instruction to the POP 6 to set up a call connection to the specified originating number (step 504). The POP 6 thereupon formulates a call setup message (an Integrated Services Digital Network User Part (ISUP)) Initial Address Message (IAM), for example, and forwards the call setup message into the PSTN 24 (step 505) which forwards the message through the PSTN 24 to the MSC 20b (step 506).

Those having ordinary skill in this art will recognize that in fact, the IAM message will be forwarded through the PSTN 24 along the CCS network 22 that directs connections through the PSTN 24, however this has been omitted from FIGs. 5-8 for simplicity.

On receipt of the IAM, the MSC 20b applies ringing to the cellular telephone 16b (step 507) and returns an Address Complete (ACM) message through the PSTN 24 to the POP 6 (steps 508-509). Subsequently, the cellular telephone 16b is answered (step 510), which causes the MSC 20b to return an Answer (ANM) message through the PSTN 24 to the POP 6 (steps 511-512). The call controller 8 periodically polls the POP 6 to determine call status (step 513) and retrieves the call status when it is available (step 514). The information retrieved informs the call controller 8 that the first call to the originating number has been completed. The call controller thereupon sends an instruction to the POP 6 to set up a call connection to the first specified destination number, corresponding to WAP telephone 12 (step 515). The POP 6 thereupon formulates a call setup message and forwards the call setup message into the PSTN 24 (step 516) which forwards the message to the MSC 20b (step 517). On receipt of the IAM, the MSC 20b applies ringing to the WAP telephone 12 (step 518) and returns an Address Complete (ACM) message through the PSTN 24 to the POP 6 (steps 519-520). Subsequently, the WAP telephone 12 is answered (step 521), which causes the MSC 20b to return an Answer (ANM) message through the PSTN 24 to the POP 6 (steps 522-523). The call controller 8 periodically polls the POP 6 to determine call status (step 524) and retrieves the call status when it is available (step 525). The information retrieved informs the call controller 8 that the second call to the first destination number has been completed. The call controller 8 thereupon instructs the POP 6 to bridge the calls together (step 526).

The call controller then sends an instruction to the POP 6 to set up a call connection to the second specified destination number, corresponding to cellular telephone 16a (step 530). The POP 6 thereupon formulates a call setup message and forwards the call setup message into the PSTN 24 (step 531) which forwards the message through the PSTN 24 to the MSC 20a (step 532). On receipt of the IAM, the MSC 20a applies ringing to cellular telephone 16a (step 533) and returns an Address Complete (ACM) message through the PSTN 24 to the POP 6 (steps 534-535). Subsequently; cellular telephone 16a is answered (step 536), which causes the MSC 20a to return an Answer (ANM) message through the PSTN 24 to the POP 6 (steps 537-538).

The call controller 8 periodically polls the POP 6 to determine call status (step 539) and retrieves the call status when it becomes available (step 540). The information retrieved informs the call controller 8 that the third call to the second destination number has been answered. The call controller 8 then instructs the POP 6 to bridge the calls together (step 541). At this point the conference call has been established. The call controller 8 therefore sends an information record to the billing database 27b instructing that a billing transaction be created for the call (step 545).

When one of the participants goes on hook, say WAP telephone 12 (step 546), a Release message is generated, in this case by MSC 20b (step 547), which is forwarded through the PSTN 24 to the POP 6 (step 548).

The call controller 8 periodically polls the POP 6 to determine call status (step 549) and retrieves the call status when it is available (step 550). The information retrieved informs the call controller 8 that WAP telephone 12 has gone on hook. Meanwhile, the POP 6 acknowledges this with a Release Complete (RLC) message sent back to the PSTN (step 551).

When another of the participants goes on hook, say cellular telephone 16b (step 552), a Release message is generated, in this case by MSC 20b (step 553), which is forwarded through the PSTN 24 to the POP 6 (step 554). The call controller 8 periodically polls the POP 6 to determine call status (step 555) and retrieves the call status when it is available (step 556). The information retrieved informs the call controller 8 that cellular telephone 16b has gone on hook. Meanwhile the POP 6 acknowledges the Release message with a Release Complete (RLC) sent back to the PSTN 24. At this point the conference call has been terminated. The call controller 8 therefore sends an information record to the billing database 27b instructing that a billing transaction be created for the call (step 558).

### Scheduling and Establishing a Conference Call on an Immediate Basis

Those having ordinary skill in this art will readily recognize that the call flow for a conference call on an immediate basis will consist of the call flows shown in FIG.4 followed immediately by the call flows shown in FIG. 5. That is to say, the wait step (step 446) is omitted.

### Establishing a Conference Call Involving a Participant Without Text Messaging Capability

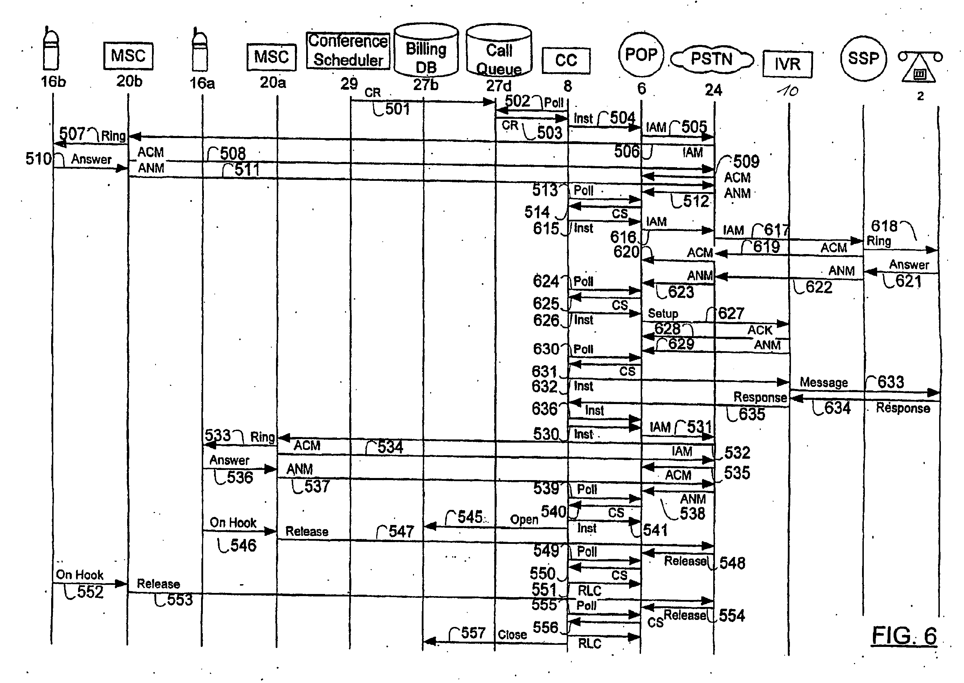

FIG. 6 shows the call flow for a successful attempt to arrange a conference call involving a participant using a wireline telephone and without text message capability. For exemplary purposes, it is assumed that cellular telephone 16b is the originator of the conference call request, and wishes to join in wireline telephone 2 and cellular telephone 16a.

The processing in FIG. 6 is identical to the processing in FIG. 5, with the exception that steps 515 through 526 are omitted and are replaced with steps 615-636, described below.

The call controller sends an instruction to the POP 6 to set up a call connection to the first specified destination number, in this case corresponding to wireline telephone 2 (step 615). The POP 6 thereupon formulates a call setup message and forwards the call setup message into the PSTN 24 (step 616) which forwards the message through the PSTN 24 to the switch, for example an SSP, that controls wireline telephone 2a (step 617). On receipt of the IAM, the switch applies ringing to the wireline telephone 2 (step 618) and returns an Address Complete (ACM) message through the PSTN 24 to the POP 6 (steps 619-620). Subsequently, the wireline telephone 2a is answered (step 621), which causes the SSP to return an Answer (ANM) message through the PSTN 24 to the POP 6 (steps 622-623). The call controller 8 periodically polls the POP 6 to determine call status (step 624) and retrieves the call status when it is available (step 625). The information retrieved informs the call controller 8 that the second call to the first destination number has been completed. The call controller 8 in this case notes that confirmation that the conference call is accepted needs to be obtained, as explained above with reference to FIG. 3. It instructs the POP 6 to activate the IVR 10 (step 626). The POP 6 is connected to the IVR 10 by a Small Message Desk Interface (SMDI) or an ISDN Private Rate Interface (PRI) and sends an ISDN setup message to the IVR 10 (step 627). The IVR 10 responds with an Acknowledge message (step 628) and an Answer message (step 629).

The call controller 8 periodically polls the POP 6 to determine call status (step 630) and retrieves the call status when it is available (step 631). The information retrieved informs the call controller 8 that the third call to the second destination number has been answered. The call controller 8 then sends a message, for example through a TCP/IP connection to the IVR 10 instructing the IVR 10 to query the customer to determine whether they wish to accept the conference call connection being established (step 632).

The IVR 10 plays an appropriate recorded voice message, which is heard by the proposed participant at the wireline telephone 2 (step 633). In response, the proposed participant delivers a response, say by inputting digits using the telephone dial pad (step 634). Alternatively, the proposed participant could be prompted to deliver a voice response which is recorded and analyzed. The response is captured by the IVR 10 and returned to the call controller 8 along the TCP/IP connection (step 635). In this example, it is assumed that the response is to accept the conference call. The call controller 8 thereupon instructs the POP to bridge the calls together (step 636).

Processing from this point forward generally follows the sequence set out in FIG. 5 at step 530 onward.

### Joining an Ongoing Conference Call

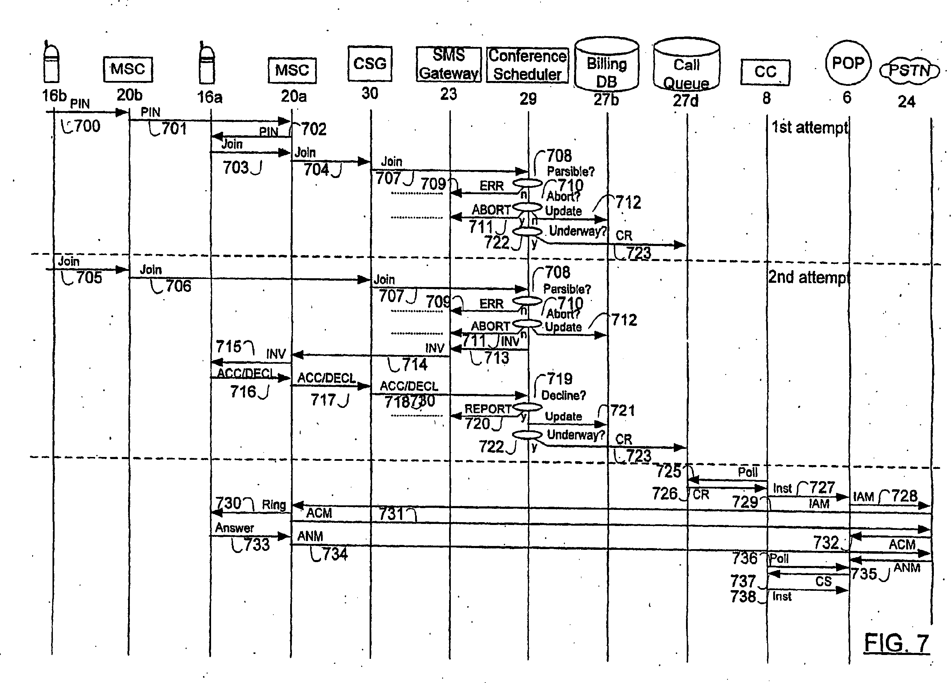

FIG. 7 shows the call flow for two successful attempts by a participant to join an ongoing conference call at the invitation of an existing participant. For exemplary purposes, it is assumed that cellular telephone 16b is a current participant of the ongoing conference call and wishes that cellular telephone 16a join in the conference call.

In the first attempt, cellular telephone 16b transmits, by SMS message to cellular telephone 16a, the CBN corresponding to the ongoing conference call and cellular telephone 16a transmits a Join request to the conference scheduler database application 29. The customer at cellular telephone 16b sends a message containing the CBN by SMS to MSC 20b (step 700). The message is forwarded in turn to MSC 20a and eventually to cellular telephone 16a (step 701-702). The customer at cellular telephone 16a sends a Join message by SMS to MSC 20a (step 703). The message is in turn forwarded to conference scheduler gateway 30 and eventually to the conference scheduler database application 29 (steps 704, 707). The conference scheduler database application 29 determines if it is parsible (step 708). If not, the conference scheduler database application 29 returns an error message to the customer at cellular telephone 16b along the same path as shown in steps 404-406 of FIG. 4 (step 709 shown but remaining are not illustrated).

If the message is parsible, the conference scheduler database application 29 determines if the abort time has expired, as described above with reference to FIG. 2 (step 710). If so, the conference scheduler database application 29 returns an abort message to the customer at cellular telephone 16b along the same path as steps 404-406 (step 711 shown but remaining steps are not illustrated). If the abort time has not expired, the conference scheduler database application 29 updates the entry in the conference database 27c to reflect the Join request, as described above with reference to FIG. 2 (step 712). The conference scheduler database application 29 thereafter determines if the conference call is already underway (step 722). Having determined that it is, the conference scheduler database application 29 writes a call request record to the call queue 27d (step 723).

The processing which follows is common to both the first attempt (flows shown above the first dotted line) and the second attempt (flows shown between the first and second dotted line). The flows for the common processing are shown below the second dotted line.

The call controller 8 polls the call queue 27d on a regular basis (step 725) and retrieves call requests written to the call queue (step 726).

When a Join request is retrieved, call controller 8 sends an instruction to the POP 6 to set up a call connection to the specified destination number, corresponding to cellular telephone 16a (step 727). The POP 6 thereupon formulates a call setup message and forwards the call setup message into the PSTN 24 (step 728) which forwards the message through the PSTN 24 to the MSC 20a (step 729). On receipt of the IAM, the MSC 20a applies ringing to cellular telephone 16a (step 730) and returns an Address Complete (ACM) message through the PSTN 24 to the POP 6 (steps 731-732). Subsequently, cellular telephone 16a is answered (step 733), which causes the MSC 20a to return an Answer (ANM) message through the PSTN 24 to the POP 6 (steps 734-735). The call controller 8 periodically polls the POP 6 to determine call status (step 736) and retrieves the call status when it is available (step 737). The information retrieved informs the call controller '8 that the third call to the second destination number has been completed. The call controller 8 thereupon instructs the POP to bridge the calls together (step 738). Processing from this point forward generally follows the sequence set out in FIG. 5 at step 545 onward.

### Second Attempt

In the second attempt (shown in FIG. 7 between the first and second dotted lines), cellular telephone 16b transmits a Join request to the conference scheduler database application 29. The processing for this attempt is identical to the processing for the first attempt, with the exception that steps 700-704 are replaced by steps 705-706 and steps 713-721, described below are introduced after step 712 and before step 722.

Cellular telephone 16b sends a Join message by SMS to MSC 20b (step 705). The message is forwarded to conference scheduler gateway 30 (step 706) and eventually to the conference scheduler database application 29 (step 707). The conference scheduler database application 29 determines if it is parsible (step 708). If not, the conference scheduler database application 29 returns an error message to the customer at cellular telephone 16b backwards along the same path as shown in steps 404-406 of FIG. 4 (step 709 shown but remaining flows omitted). If the message is parsible, the conference scheduler database application 29 determines if the abort time has expired, as described above with reference to FIG. 2 (step 710). If so, the conference scheduler database application 29 returns an abort message to the customer at cellular telephone 16b along the same path as steps 404-406 (step 711 shown but remaining flows omitted). If the abort time has not expired, the conference scheduler database application 29 updates the entry in the conference database 27c to reflect the Join request, as described above with reference to FIG. 2 (step 712).

The conference scheduler database application 29 thereafter formulates an Invitation message that it forwards to the SMS gateway 23 (step 713) for transmission to cellular telephone 16a. The SMS gateway 23 forwards the Invitation message to MSC 18a (step 714), which forwards it to cellular telephone 16a (step 715). The cellular telephone 16a transmits an Accept or Decline message that it forwards through MSC 20a, conference scheduler gateway 30 and to the conference scheduler database application 29 (steps 716-718). The conference scheduler database application 29 determines if the message is a Decline message (step 19). If so, it transmits a report message to this effect to the customer at cellular telephone 16b along the same path as steps 404-406 (step 720 shown but remaining flows omitted). In either event, the conference scheduler database application 29 updates the conference database 27c (step 721). Processing from this point forward generally follows the sequence set out in FIG. 7 at step 722 onward, as discussed above.

### Forwarding an Ongoing Conference Call

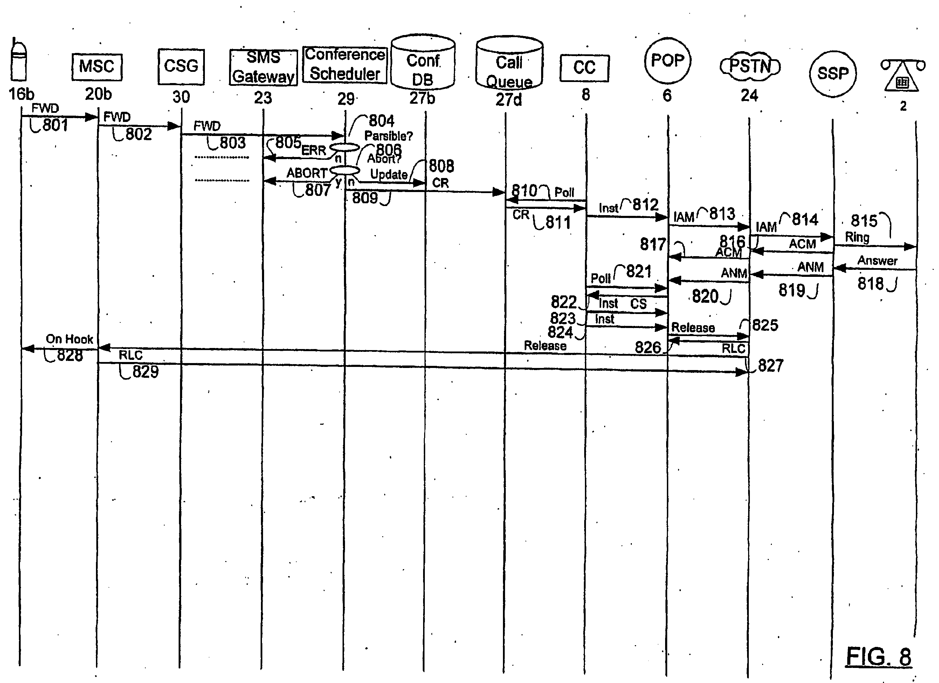

FIG. 8 shows the call flow for a successful attempt by a participant to forward an ongoing conference call from one telephone number to another. For exemplary purposes, it is assumed that cellular telephone 16b is a present participant of the ongoing conference call and wishes to continue its participation in the conference call using wireline telephone 2.

The customer at cellular telephone 16b sends a Forward message by SMS to MSC 20b (step 801). The message is in turn forwarded to conference scheduler gateway 30 and to the conference scheduler database application 29 (steps 802-803). The conference scheduler database application 29 determines if it is parsible (step 804). If not, the conference scheduler database application 29 returns an error message to the customer at cellular telephone 16b backwards along the same path as shown in steps 404-406 of FIG. 4 (step 805 shown but remaining flows omitted). If the message is parsible, the conference scheduler database application 29 determines if the abort time has expired, as described above with reference to FIG. 2 (step 806). If so, the conference scheduler database application 29 returns an abort message to the customer at cellular telephone 16b along the same path as steps 404-406 (step 807 shown but remaining flows omitted). If the abort time has not expired, the conference scheduler database application 29 updates the entry in the conference database 27c to reflect the forward request, as described above with reference to FIG. 2. (step 808). The conference scheduler database application 29 writes a call request record to the call queue 27d (step 809). The call controller 8 polls the call queue 27d on a regular basis (step 810) and retrieves call requests written to the call queue (step 811). When a Join request is retrieved, the call controller sends an instruction to the POP 6 to set up a call connection to the specified destination number, in this case corresponding to wireline telephone 2a (step 812). The POP 6 thereupon formulates a call setup message and forwards the call setup message into the PSTN 24 (step 813) which forwards the message through the PSTN 24 to the switch, for example an SSP that controls wireline telephone 2 (step 814). On receipt of the IAM, the switch applies ringing to the wireline telephone 2 (step 815) and returns an Address Complete (ACM) message through the PSTN 24 to the POP 6 (steps 816-817). Subsequently, the wireline telephone 2 is answered (step 818), which causes the SSP to return an Answer (ANM) message through the PSTN 24 to the POP 6 (steps 819-820). The call controller 8 periodically polls the POP 6 to determine call status (step 821) and retrieves the call status when it is available (step 822). The information retrieved informs the call controller 8 that the call to the destination number has been completed. The call controller 8 thereupon instructs the POP to bridge the call to the ongoing conference call (step 823).

The call controller 8 also instructs the POP 6 to release the call to the original number used by the customer, in this case, to cellular telephone 16b (step 824). The POP 6 thereupon formulates a Release message and forwards the Release message into the PSTN 24 (step 825), which returns a Release complete message (step 826) forwards a the Release message through the PSTN 24 to MSC 20b (step 827).

On receipt of the Release message, MSC 20b plays a dial tone to cellular telephone 16b, which causes the customer to put the cellular telephone on hook (step 828) and returns a Release Complete (RLC) message through the PSTN 24 to the POP 6 (step 829).

### Missed, Dropped or Unanswered Calls

In real life scenarios, callers are often unavailable at the scheduled time for a conference call, may loose contact to due poor reception, dead battery, or for many other reasons, or may away from their desk if a wireline phone has been designated as the preferred connection device. In such instances, if the conference organizer has specified a SMS-enabled phone as the primary or backup connection device, the conference scheduler database application 29 is preferably provisioned to send a SMS message to each participant with a SMS enabled device that cannot be joined to the conference call, or is dropped from the call. The SMS message includes the CBN for the conference call and an invitation to join, or rejoin, the conference call.

After the participant receives the SMS message, he replies to the SMS message with a SMS message that includes the CBN. When the conference scheduler application 29 receives the reply message, it checks the recipients telephone number against all primary and backup telephone numbers scheduled to participate in the call. If the participant's telephone number is among the telephone numbers of participants in the call, the conference call scheduler database application 29 passes the telephone number to the CC 8, with instructions to bridge to the answered call to the conference call identified by the CBN. The CC 8 then calls the participant using the telephone number and bridges the participant to the conference call. This mechanism therefore provides a simple and convenient way to join participants who have missed or forgotten a conference call, or have been dropped from the call for any reason.

The present invention can be implemented in digital electronic circuitry, or in computer hardware, firmware, software, or in any combination thereof. Apparatus of the invention can be implemented in a computer program product tangibly embodied in a machine-readable storage device for execution by a programmable processor; and methods actions can be performed by a programmable processor executing a program of instructions to perform functions of the invention by operating on input data and generating output. The invention can be implemented advantageously in one or more computer programs that are executable on a programmable system including at least one input device, and at least one output device. Each computer program can be implemented in a high-level procedural or object oriented programming language, or in assembly or machine language if desired; and in any case, the language can be a compiled or interpreted language.

suitable processors include, by way of example, both general and specific microprocessors. Generally, a processor will receive instructions and data from a read-only memory and/or a random access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD disks. Any of the foregoing can be supplemented by, or incorporated in ASICs (application-specific integrated circuits).

Examples of such types of computers are programmable processing systems contained in the conference scheduler database application 29 and the call controller 8 shown in FIG. 1 suitable for implementing or performing the apparatus or methods of the invention. The system may comprise a processor, a random access memory, a hard drive controller and an input/output controller coupled by a processor bus.

It will be apparent to those skilled in this art that various modifications and variations may be made to the embodiments disclosed herein, consistent with the present invention. For example, the conference scheduler gateway 30, conference scheduler database application 29 and service-center 4 need not be located in physically disparate locations as shown in FIG. 1. Rather, it is possible for the conference scheduler gateway 30, which is in wireless communication with SMS users, to be directly connected to the call controller 8. The call controller 8 may either contain all the functionality of the conference scheduler database application 29, or be directly connected with it. Further, the databases 27 may be directly accessed by the call controller 8, or remain accessible by Ethernet communication as is shown in FIG. 1. In this fashion, there is no need to connect through the Internet in order to receive requests from users. Nevertheless, the well-developed hierarchy for sending SMS messages to wireless customers through the Internet 26 and an SMS gateway 23 is well understood and may continue to be appropriated.

If the three components are directly connected, it would be possible to permit users without SMS capability to interact with the conference scheduler database application 29 by merely dialing the dedicated conference scheduler gateway 30 telephone number and inputting messages with the assistance of the IVR unit 10.

Other embodiments consistent with the present invention will become apparent from consideration of the specification and the practice of the invention disclosed therein.

## Claims

1. A system for enabling setup and control features for a conference call using wireless short message service (SMS) messages, the system comprising a conference scheduler gateway (32) for receiving a SMS message in a predetermined format requesting a conference call setup operation; a service center (4) that is adapted to receive instructions from a conference scheduler database application (29) and includes switching equipment (6) connected with a public switched telephone network (24) for generating and issuing call control messages in order to effect the conference call setup operation, **CHARACTERIZED By**:
the conference scheduler database application (29) is adapted to determine whether the SMS message requests a conference call setup, or a control operation for controlling an in-progress conference call, and the conference scheduler database application is further adapted to present information as service requests to a call controller (8) of the service center (4) to effect conference call connection setup or control conference call connections.

2. The system as claimed in claim 1 wherein the conference scheduler gateway (32) comprises a wireless receiver adapted to receive the SMS message and convert the SMS message to a text message that is forwarded through the Internet (26) to the conference scheduler database application (29).

3. The as claimed in claim 1 wherein the conference scheduler gateway (32) comprises a wireless receiver connected to the service center and is adapted to pass a content of the SMS message directly to the conference scheduler database application (29).

4. The system as claimed in claim 3 wherein the conference scheduler gateway (32) comprises a communications processor adapted to communicate with a mobile switching center (20a,20b) using a wireless link to receive the SMS messages.

5. The system as claimed in claim 4 further comprising a SMS gateway (23) adapted to formulate and send SMS messages to invite participants to participate in the conference call.

6. The system as claimed in claim 5 wherein the SMS gateway (23) is adapted to send identifier information with the invitation SMS messages, and the conference scheduler gateway (32) is adapted to accept SMS replies containing the identifier information that enables the recipients of the invitation SMS message to initiate a connection with the conference call.

7. The system as claimed in claim 1 wherein the conference scheduler database application (29) comprises an application element adapted to gather information required for the call setup or control operation, and to present the information to the service center.

8. The system as claimed in claim 7 wherein the conference scheduler database application (29) is adapted to retrieve some of the information from a subscriber profile (27a) associated with a subscriber who issued the SMS message.

9. The system as claimed in claim 1 wherein the conference scheduler database application (29) further comprises a database (27d) adapted to store a queue of service requests that is accessed by the call controller (8).

10. The system as claimed in claim 1. wherein the service center (4) comprises telephone switching equipment (6) with a conference bridge, the telephone switching equipment being connected to the public switched telephone network (24).

11. The system as claimed in claim 10 wherein the switching equipment (6) further comprises interactive voice response (10) functionality.

12. The system as claimed in claim 9 wherein the call controller (8) is further adapted to access the database (27d) and to interface with the switching equipment (8), which serves as a point of presence in the PSTN (24) to effect the conference call setup or control operation in accordance with the service request.

13. A method of enabling setup and control of a conference call using wireless short message service (SMS) messages, the method comprising receiving at a conference scheduler gateway (32) a SMS message in a predetermined format for requesting a conference call setup operation; forwarding at least a content of the SMS message to a conference scheduler database application (29); and generating and issuing call control messages into a PSTN (24) in order to effect the conference call setup operation,
**CHARACTERIZED By**:
determining whether the SMS message requests a setup or control operation, and forwarding a service' request to switching equipment (8) connected with the public switched telephone network (24) to effect the conference call setup or control operation, and presenting information as service requests to a call controller (8) of a service center (4) to effect the conference call connection setup or control conference call connections.

14. The method as claimed in claim 13, wherein if the SMS message requests a conference call setup operation, the method further comprises a step of formulating and sending messages to invite participants identified in the SMS message to join the conference call.

15. The method as claimed in claim 14, further ' comprising a step communicating the invitations using SMS messages.

16. The method as claimed in claim 13, further comprising a step of assigning a call identifier to the setup or control operation and communicating a call identifier to prospective participants, so that the participants may initiate a connection to the conference call.

17. The method as claimed in claim 13, wherein the step of determining the type of operation requested comprises extracting information from the SMS message.

18. The method as claimed in claim 13, wherein the step of determining the type of operation requested further comprises extracting information from a subscriber profile (27a) associated with a subscriber who sent the SMS message.

19. The method as claimed in claim 13, wherein the step of forwarding a service request comprises steps of:
adding a service request to a queue (27d); and
accessing the service request in the queue to effect the conference call connection setup or control conference call connections.

20. A computer-readable medium for storing computer-executable instructions for performing all the method steps claimed in any one of claims 13-19, when run on a computer.

## Patentansprüche

1. System zur Aktivierung von Setup- und Steuerungs-Eigenschaftsmerkmalen für eine Telefonkonferenz unter Verwendung von Nachrichten eines drahtlosen Kurznachrichtendienstes (SMS), wobei das System ein Konferenz-Scheduler-Gateway (32) für den Empfang einer SMS-Nachricht in einem vorher festgelegten Format aufweist, welches einen Telefonkonferenz-Setup-Betrieb anfordert; eine Dienstleistungszentrale (4), welche derart ausgelegt ist, dass sie Befehle von einer Konferenz-Scheduler-Datenbankanwendung (29) empfängt und eine Schalteinrichtung (6) einschließt, welche mit einem öffentlichen Telefonnetz (24) zur Erzeugung und Ausgabe von Verbindungssteuerungsnachrichten verbunden ist, um den Telefonkonferenz-Setup-Betrieb auszuführen, **dadurch gekennzeichnet, dass:**
die Konferenz-Scheduler-Datenbankanwendung (29) derart ausgelegt ist, dass sie bestimmt, ob die SMS-Nachricht einen Telefonkonferenz-Setup anfordert, oder einen Steuerbetrieb zur Steuerung einer laufenden Telefonkonferenz, und die Konferenz-Scheduler-Datenbankanwendung des Weiteren derart ausgelegt ist, dass sie Informationen als Dienstanforderungen für eine Verbindungssteuervorrichtung (8) der Dienstleistungszentrale (4) präsentiert, um einen Telefonkonferenz-Verbindungs-Setup auszuführen oder Telefonkonferenzverbindungen zu steuern.

2. System nach Anspruch 1, **dadurch gekennzeichnet, dass** das Konferenz-Scheduler-Gateway (32) einen drahtlosen Empfänger aufweist, der für den Empfang der SMS-Nachricht und für die Umwandlung der SMS-Nachricht in eine Textnachricht ausgelegt ist, wobei die Textnachricht über das Internet (26) an die Konferenz-Scheduler-Datenbankanwendung (29) weitergeleitet wird.

3. System nach Anspruch 1, **dadurch gekennzeichnet, dass** das Konferenz-Scheduler-Gateway (32) einen mit der Dienstleistungszentrale verbundenen drahtlosen Empfänger aufweist, und derart ausgelegt ist, dass es einen Inhalt der SMS-Nachricht direkt an die Konferenz-Scheduler-Datenbankanwendung (29) übermittelt.

4. System nach Anspruch 3, **dadurch gekennzeichnet, dass** das Konferenz-Scheduler-Gateway (32) einen Kommunikationsprozessor aufweist, welcher zur Kommunikation mit einer mobilen Vermittlungszentrale (20a, 20b) ausgelegt ist, indem eine drahtlose Verbindung zum Empfang der SMS-Nachrichten verwendet wird.

5. System nach Anspruch 4, welches des Weiteren ein SMS-Gateway (23) aufweist, welches zur Abfassung und Übertragung von SMS-Nachrichten ausgelegt ist, um Teilnehmer einzuladen, in der Telefonkonferenz teilzunehmen.

6. System nach Anspruch 5, **dadurch gekennzeichnet, dass** das SMS-Gateway (23) derart ausgelegt ist, dass es Identifizierungsinformationen mit den Einladungs-SMS-Nachrichten sendet, und dass das Konferenz-Scheduler-Gateway (32) derart ausgelegt ist, dass es SMS-Antworten, welche die Identifizierungsinformationen enthalten, annimmt, wodurch es den Empfängern der Einladungs-SMS-Nachrichten ermöglicht wird, eine Verbindung mit der Telefonkonferenz zu veranlassen.

7. System nach Anspruch 1, **dadurch gekennzeichnet, dass** die Konferenz-Scheduler-Datenbankanwendung (29) ein Anwendungselement aufweist, welches zur Sammlung von Informationen, welche für den Verbindungs-Setup oder den Steuerbetrieb notwendig sind, und zur Präsentation der Informationen für die Dienstleistungszentrale ausgelegt ist.

8. System nach Anspruch 7, **dadurch gekennzeichnet, dass** die Konferenz-Scheduler-Datenbankanwendung (29) derart ausgelegt ist, dass sie einige Informationen aus einem Teilnehmerprofil (27a) abruft, welches einem Teilnehmer zugehörig ist, der die SMS-Nachricht ausgegeben hat.

9. System nach Anspruch 1, **dadurch gekennzeichnet, dass** die Konferenz-Scheduler-Datenbankanwendung (29) des Weiteren eine Datenbank (27d) aufweist, welche zur Speicherung einer Warteschlange von Dienstanforderungen, auf welche die Verbindungs-Steuereinrichtung (8) zugreift, ausgelegt ist.

10. System nach Anspruch 1, **dadurch gekennzeichnet, dass** die Dienstleistungszentrale (4) eine Telefonvermittlungseinrichtung (6) mit einer Konferenzbrücke aufweist, wobei die Telefonvermittlungseinrichtung an das öffentliche Telefonnetz (24) angeschlossen ist.

11. System nach Anspruch 10, **dadurch gekennzeichnet, dass** die Vermittlungseinrichtung (6) des Weiteren eine interaktive Sprachanwort-Funktionsweise aufweist.

12. System nach Anspruch 9, **dadurch gekennzeichnet, dass** die Verbindungs-Steuereinrichtung (8) des Weiteren derart ausgelegt ist, dass sie auf die Datenbank (27d) zugreift und dass sie an die Vermittlungseinrichtung (6) koppelt, welche als Zugangspunkt in dem öffentlichen Telefonnetz PSTN (24) dient, um den Telefonkonferenz-Setup oder einen Steuerbetrieb entsprechend der Dienstanforderung auszuführen.

13. Verfahren zur Aktivierung von Setup und Steuerung einer Telefonkonferenz unter Verwendung von Nachrichten eines drahtlosen Kurznachrichtendienstes (SMS), wobei das Verfahren die folgenden Schritte aufweist: Empfang einer SMS-Nachricht in einem vorher festgelegten Format an einem Konferenz-Scheduler-Gateway (32), um einen Telefonkonferenz-Setup-Betrieb anzufordern; Weiterleitung zumindest eines Inhalts der SMS-Nachricht an eine Konferenz-Scheduler-Datenbankanwendung (29); und Erzeugung und Ausgabe von Verbindungssteuerungsnachrichten in einem öffentlichen Telefonnetz PSTN (24), um den Telefonkonferenz-Setup-Betrieb auszuführen, **dadurch gekennzeichnet, dass:**
eine Bestimmung erfolgt, ob die SMS-Nachricht einen Telefonkonferenz-Setup oder einen Steuerbetrieb anfordert, und Weiterleitung einer Dienstanforderung an die Vermittlungseinrichtung (6), welche mit dem öffentlichen Telefonnetz (24) verbunden ist, um den Telefonkonferenz-Setup oder einen Steuerbetrieb auszuführen, und Präsentation der Informationen als Dienstanforderungen für eine Verbindungs-Steuereinrichtung (8) einer Dienstleistungszentrale (4), um den Telefonkonferenzverbindungs-Setup auszuführen oder die Telefonkonferenzverbindungen zu steuern.

14. Verfahren nach Anspruch 13, **dadurch gekennzeichnet, dass** in dem Fall, dass die SMS-Nachricht einen Telefonkonferenz-Setup-Betrieb anfordert, das Verfahren des Weiteren einen Schritt der Abfassung und Sendung von Nachrichten aufweist, um in der SMS-Nachricht identifizierte Teilnehmer einzuladen, an der Telefonkonferenz teilzunehmen.

15. Verfahren nach Anspruch 14, welches des Weiteren einen Schritt aufweist, in welchem die Einladungen unter Verwendung von SMS-Nachrichten mitgeteilt werden.

16. Verfahren nach Anspruch 13, welches des Weiteren einen Schritt der Zuordnung einer Verbindungskennung zu dem Setup oder Steuerbetrieb und der Mitteilung einer Verbindungskennung an zukünftige Teilnehmer aufweist, so dass die Teilnehmer eine Verbindung zur Telefonkonferenz veranlassen können.

17. Verfahren nach Anspruch 13, **dadurch gekennzeichnet, dass** der Schritt der Bestimmung der angeforderten Betriebsart den Schritt der Extrahierung von Informationen aus der SMS-Nachricht aufweist.

18. Verfahren nach Anspruch 13, **dadurch gekennzeichnet, dass** der Schritt der Bestimmung der angeforderten Betriebsart des Weiteren den Schritt der Extrahierung von Informationen aus einem Teilnehmerprofil (27a) aufweisen, welches einem Teilnehmer zugehörig ist, der die SMS-Nachricht gesendet hat.

19. Verfahren nach Anspruch 13, **dadurch gekennzeichnet, dass** der Schritt der Weiterleitung einer Dienstanforderung die folgenden Schritte aufweist:
Hinzufügen einer Dienstanforderung zu einer Warteschlange (27d); und
Abrufen der Dienstanforderung in der Warteschlange, um den Telefonkonferenzverbindungs-Setup auszuführen oder die Telefonkonferenz-Verbindungen zu steuern.

20. Computerlesbares Medium zur Speicherung von computer-ausführbaren Befehlen, um alle in den Ansprüchen 13 bis 19 beanspruchten Verfahrensschritte auszuführen, wenn diese auf einem Computer ausgeführt werden.

## Revendications

1. Système permettant des fonctions de configuration et de commande pour une conférence téléphonique en utilisant des messages de type service de messages courts (SMS) sans fil, le système comprenant une passerelle de programmation de conférence (32) pour recevoir un message SMS dans un format prédéterminé nécessitant une opération de configuration de conférence téléphonique ; un centre de services (4) qui est adapté pour recevoir des instructions d'une application de base de données de programmation de conférence (29) et qui comporte un équipement de commutation (6) connecté à un réseau téléphonique public commuté (24) pour générer et émettre des messages de commande d'appel afin d'exécuter l'opération de configuration de conférence téléphonique, **caractérisé par le fait que** :
l'application de base de données de programmation de conférence (29) est adaptée pour déterminer si le message SMS nécessite une configuration de conférence téléphonique, ou une opération de commande pour commander une conférence téléphonique en cours, et l'application de base de données de programmation de conférence est en plus adaptée pour présenter des informations sous forme de demandes de service à une unité de commande d'appel (8) du centre de services (4) pour effectuer une configuration de connexions de conférence téléphonique ou commander des connexions de conférence téléphonique.

2. Système tel que revendiqué dans la revendication 1, dans lequel la passerelle de programmation de conférence (32) comprend un récepteur sans fil adapté pour recevoir le message SMS et convertir le message SMS en un message texte qui est transféré par Internet (26) vers l'application de base de données de programmation de conférence (29).

3. Système tel que revendiqué dans la revendication 1, dans lequel la passerelle de programmation de conférence (32) comprend un récepteur sans fil connecté au centre de services et est adaptée pour faire passer directement un contenu du message SMS à l'application de base de données de programmation de conférence (29).

4. Système tel que revendiqué dans la revendication 3, dans lequel la passerelle de programmation de conférence (32) comprend un processeur de communications adapté pour communiquer avec un centre de commutation mobile (20a, 20b) en utilisant une liaison sans fil afin de recevoir les messages SMS.

5. Système tel que revendiqué dans la revendication 4, comprenant en plus une passerelle SMS (23) adaptée pour formuler et envoyer des messages SMS afin d'inviter des participants à participer à la conférence téléphonique.

6. Système tel que revendiqué dans la revendication 5, dans lequel la passerelle SMS (23) est adaptée pour envoyer des informations d'identifiant avec les messages SMS d'invitation, et la passerelle de programmation de conférence (32) est adaptée pour recevoir des réponses SMS contenant les informations d'identifiant qui permettent aux destinataires des messages SMS d'invitation de lancer une connexion avec la conférence téléphonique.

7. Système tel que revendiqué dans la revendication 1, dans lequel l'application de base de données de programmation de conférence (29) comprend une élément applicatif adapté pour réunir des informations requises pour l'opération de configuration ou de commande d'appel, et pour présenter les informations au centre de services.

8. Système tel que revendiqué dans la revendication 7, dans lequel l'application de base de données de programmation de conférence (29) est adaptée pour récupérer quelques informations à partir d'un profil d'abonné (27a) associées à un abonné qui a émis les messages SMS.

9. Système tel que revendiqué dans la revendication 1, dans lequel l'application de base de données de programmation de conférence (29) comprend en plus une base de données (27d) adaptée pour stocker une file d'attente de demandes de service à laquelle l'unité de commande d'appel (8) accède.

10. Système tel que revendiqué dans la revendication 1, dans lequel le centre de services (4) comprend un équipement de commutation téléphonique (6) avec un pont de conférence, l'équipement de commutation téléphonique étant connecté au réseau téléphonique public commuté (24).

11. Système tel que revendiqué dans la revendication 10, dans lequel l'équipement de commutation (6) comprend en plus une fonctionnalité (10) de réponse vocale interactive.

12. Système tel que revendiqué dans la revendication 9, dans lequel l'unité de commande d'appel (8) est en plus adaptée pour accéder à la base de données (27d) et d'établir une interface avec l'équipement de commutation (8), qui sert de point de présence dans le PSTN (24) afin d'exécuter l'opération de configuration ou de commande de conférence téléphonique conformément à la demande de service.

13. Procédé permettant de configurer et de commander une conférence téléphonique en utilisant des messages de service de messages courts (SMS) sans fil, le procédé comprenant la réception au niveau d'une passerelle de programmation de conférence (32) d'un message SMS dans un format prédéterminé pour demander une opération de configuration de conférence téléphonique ; le transfert d'au moins un contenu du message SMS à une application de base de données de programmation de conférence (29) ; et la génération et l'émission de messages de commande d'appel dans un PSTN (24) afin d'exécuter l'opération de configuration de conférence téléphonique, **caractérisé par** le fait :
de déterminer si le message SMS nécessite une opération de configuration ou de commande, et de transférer une demande de service à un équipement de commutation (8) connecté au réseau téléphonique public commuté (24) afin d'exécuter l'opération de configuration ou de commande de conférence téléphonique, et de présenter des informations sous forme de demandes de service à une unité de commande d'appel (8) d'un centre de services (4) afin d'effectuer une configuration de connexions de conférence téléphonique ou commander des connexions de conférence téléphonique.

14. Procédé tel que revendiqué dans la revendication 13, dans lequel, si le message SMS nécessite une opération de configuration de conférence téléphonique, le procédé comprend en plus une étape de formulation et d'envoi de messages afin d'inviter des participants identifiés dans le message SMS à rejoindre la conférence téléphonique.

15. Procédé tel que revendiqué dans la revendication 14, comprenant en plus une étape communiquant les invitations en utilisant des messages SMS.

16. Procédé tel que revendiqué dans la revendication 13, comprenant en plus une étape d'attribution d'un identifiant d'appel à l'opération de configuration ou de commande et communiquant un identifiant d'appel à des participants potentiels, de sorte que ces derniers puissent initier une connexion à la conférence téléphonique.

17. Procédé tel que revendiqué dans la revendication 13, dans lequel l'étape de détermination du type d'opération requise comprend l'extraction d'informations du message SMS.

18. Procédé tel que revendiqué dans la revendication 13, dans lequel l'étape de détermination du type d'opération requise comprend en plus l'extraction d'informations d'un profil d'abonné (27a) associées à un abonné qui a envoyé le message SMS.

19. Procédé tel que revendiqué dans la revendication 13, dans lequel l'étape de transfert d'une demande de service comprend les étapes qui consistent :
à ajouter une demande de service à une file d'attente (27d) ; et
à accéder à la demande de service dans la file d'attente pour effectuer une configuration de connexions de conférence téléphonique ou commander des connexions de conférence téléphonique.

20. Support lisible par ordinateur conçu pour stocker des instructions exécutables par ordinateur afin d'exécuter les étapes du procédé revendiqué dans l'une quelconque des revendications 13-19, lorsqu'elles sont exécutées sur un ordinateur.
